# EUROPÄISCHE PATENTSCHRIFT

(11) **EP 3 635 230 B1**
(45) Veröffentlichungstag und Bekanntmachung des Hinweises auf die Patenterteilung: **17.04.2024**
(21) Anmeldenummer: 18727292.7
(22) Anmeldetag: 25.05.2018
(51) Int. Cl.: F02D 41/00, G01D 5/244

(54) **VORRICHTUNG UND VERFAHREN ZUM MITTEILEN EINER LAGEÄNDERUNG EINES SIGNALGEBERRADS**
DEVICE AND METHOD FOR REPORTING A CHANGE IN THE POSITION OF A SIGNALLING WHEEL
ARRANGEMENT ET PROCÉDÉ DE COMMUNICATION D'UN CHANGEMENT DE POSITION D'UNE ROUE DE TRANSMETTEUR DE SIGNAL

(30) Priorität: 07.06.2017 DE 102017209586
(43) Veröffentlichungstag der Anmeldung: 15.04.2020
(73) Patentinhaber: Volkswagen Aktiengesellschaft, 38440 Wolfsburg (DE)
(72) Erfinder: DAETZ, Michael, 38473 Tiddische (DE); VELDTEN, Burkhard, 31234 Edemissen (DE); FRICKE, Jens, 38112 Braunschweig (DE); LOOF, Holger, 38173 Sickte (DE); MATTEG, Ines, 38165 Lehre (DE)
(86) Internationale Anmeldenummer: PCT/EP2018/063812
(87) Internationale Veröffentlichungsnummer: WO 2018/224335

(56) Entgegenhaltungen:
- DE-A1- 10 322 689
- DE-A1-102004 061 808
- DE-A1-102005 050 247
- DE-A1-102006 061 575
- DE-A1-102012 018 806
- US-A1- 2014 375 312

## Beschreibung

Die Erfindung betrifft eine Vorrichtung und ein Verfahren zum Mitteilen einer Lageänderung eines Signalgeberrads.

Im Antriebsstrang eines Kraftfahrzeugs ist es oftmals erforderlich, eine Drehzahl bzw. eine Drehrichtung zu ermitteln, wobei aus der Drehzahl typischerweise auch ein Drehwinkel abgeleitet werden kann. Zum Beispiel kann die Drehzahl der Kurbelwelle, der Nockenwelle aber auch die Verdrehung eines Zwei-Massen-Schwungrades ermittelt werden.

Dazu ist es allgemein bekannt, ein Signalgeberrad vorzusehen, welches allgemein in zwei verschiedenen Ausführungen bekannt ist, nämlich einerseits als Rad mit Zähnen und Lücken zwischen den Zähnen und andererseits als eine Art Lochblende mit Löchern, wobei die Zähne und Löcher bspw. als Signalmarken bezeichnet werden und gleich beabstandet um den Umfang des Signalgeberrads verteilt sind. Außerdem sind auch sogenannte Multipolräder bekannt, bei denen die Zähne und Lücken als magnetischer Nord- bzw. Südpol ausgeführt sind.

Zum Erfassen der Signalmarken ist es bekannt, einen Sensor, bspw. einen Hall-Sensor, einen optischen Sensor oder dergleichen, benachbart zum Signalgeberrad vorzusehen. Zum Beispiel misst der Hall-Sensor Magnetfeldänderungen, die sich durch die am Sensor vorbeilaufenden Zähne und Lücken bzw. Löcher und Material zwischen den Löchern oder magnetischem Nord-/Südpol einstellen. Ein optischer Sensor kann bspw. entsprechende Abfolgen zwischen "hell" und "dunkel" messen.

Außerdem ist es bekannt, sogenannte Referenzmarken vorzusehen, um festzustellen, um welchen Winkel sich das Signalgeberrad gedreht hat, zum Beispiel, ob es eine vollständige 360°-Drehung ausgeführt hat. Solche Referenzmarken sind oftmals als größere Abstände zwischen den Signalmarken ausgebildet oder als breiterer Zahn ausgebildet.

Aus der deutschen Offenlegungsschrift DE 10 2004 061 808 A1 ist ein Verfahren zum Betrieb einer Brennkraftmaschine mit einer Geberscheibe bekannt, die mit einer Kurbelwelle der Brennkraftmaschine gekoppelt ist. Die Geberscheibe hat abwechselnd Zähne und Zahnlücken, wobei zwei Sensorelemente entsprechend Signale mit hohem und niedrigem Signalpegel ausgeben, je nachdem, ob ein Zahn oder eine Zahnlücke erkannt wird. Zur Bestimmung von Drehrichtung und Inkrement des Drehwinkels der Kurbelwelle wird jeweils eine steigende oder fallende Signalflanke des einen Signals von dem einen Sensorelement und der Signalpegel des anderen Signals vom anderen Sensorelement herangezogen und die Drehrichtung der Kurbelwelle wird durch eine Pulslänge der Signale codiert. Nachteilig daran ist, dass das Verfahren aufwändig ist.

Aus der deutschen Offenlegungsschrift DE 10 2006 061 575 A1 ist beispielsweise ein Verfahren zur inkrementellen Ermittlung eines Drehwinkels einer bekannt.

Außerdem ist aus der deutschen Offenlegungsschrift DE 10 2005 050 247 A1 beispielsweise ein Verfahren und eine Vorrichtung zum Erkennen einer Referenzinkrementmarke einer Menge von Inkrementmarken eines Geberrades bekannt.

Ferner ist aus der deutschen Offenlegungsschrift DE 10 2012 018 806 A1 eine Steuervorrichtung und Verfahren zum Steuern eines variablen Ventilsteuermechanismus in einem Verbrennungsmotor bekannt.

Die amerikanische Offenlegungsschrift US 2014/375312 A1 offenbart einen magnetischen Feldsensor.

Eine Kurbelwinkel-Erfassungsvorrichtung ist aus der deutschen Offenlegungsschrift DE 103 22 689 A1 bekannt.

Bei Dieselmotoren ist es außerdem bekannt, einen Drehzahlsensor ohne Erkennung der Drehrichtung einzusetzen, was entsprechend nachteilig ist, da die Drehrichtungsinformation wichtig für eine korrekte Kraftstoffeinspritzung, z. B. hinsichtlich Menge und Timing oder dergleichen, sein kann.

Aufgabe der vorliegenden Erfindung ist es, eine Vorrichtung und ein Verfahren zum Mitteilen einer Lageänderung eines Signalgeberrads bereitzustellen, welche die oben genannten Nachteile wenigstens teilweise überwinden.

Diese Aufgabe wird durch die erfindungsgemäße Vorrichtung nach Anspruch 1 und das Verfahren nach Anspruch 4 gelöst.

Nach einem ersten Aspekt stellt die vorliegende Erfindung eine Vorrichtung zum Mitteilen einer Lageänderung eines Signalgeberrads, das zueinander beabstandete Signalmarken und wenigstens eine Referenzmarke aufweist, umfassend eine Sensoreinrichtung, die in Abhängigkeit der Position der Signalmarken und der wenigstens einen Referenzmarke ein Sensorsignal ausgibt, wobei das Sensorsignal bei einer Vorwärtsdrehrichtung des Signalgeberrads für jede Signalmarke eine erste Signalflanke aufweist und für die Referenzmarke eine zweite Signalflanke, wobei die erste und die zweite Signalflanke jeweils indikativ für eine gleich beabstandete Winkelposition des Signalgeberrads sind, und wobei bei einer Rückwärtsdrehrichtung das Sensorsignal (9b) pulsweitenmoduliert ist und dadurch indikativ für die Rückwärtsdrehrichtung ist.

Nach einem zweiten Aspekt stellt die vorliegende Erfindung ein Verfahren zum Mitteilen einer Lageänderung eines Signalgeberrads, das zueinander beabstandete Signalmarken und wenigstens eine Referenzmarke aufweist, umfassend Ausgeben eines Sensorsignals in Abhängigkeit der Position der Signalmarken und der wenigstens einen Referenzmarke, wobei das Sensorsignal bei einer Vorwärtsdrehrichtung des Signalgeberrads für jede Signalmarke eine erste Signalflanke aufweist und für die Referenzmarke eine zweite Signalflanke, wobei die erste und die zweite Signalflanke jeweils indikativ für eine gleich beabstandete Winkelposition des Signalgeberrads sind, und wobei bei einer Rückwärtsdrehrichtung das Sensorsignal (9b) pulsweitenmoduliert ist und dadurch indikativ für die Rückwärtsdrehrichtung ist.

Weitere vorteilhafte Aspekte der Erfindung ergeben sich aus den Unteransprüchen und der folgenden Beschreibung bevorzugter Ausführungsbeispiele der vorliegenden Erfindung.

Wie auch schon eingangs angemerkt, kann die Erkennung von Referenzmarken (Lücken) durch Inkrementalgeber an der Kurbelwelle mit Sensorzellen mit bis zu drei Hallelementen, mit einem Signalgeberrad mit typischerweise 60 Zähnen, und eine in einen derartigen zweiten Sensor integrierte Signalverarbeitung zur Verrechnung der Signale der Hallelemente bewerkstelligt werden. Um eine Referenzmarke herzustellen, kann ein Zahn oder eine Lücke zwischen zwei Zähnen vergrößert werden. In beiden Fällen ergibt sich typischerweise eine Lücke im Ausgangssignal und die aus den Sensorsignalen ermittelte Drehzahl bricht an der Stelle der Lücke ein. Hieraus kann normalerweise gefolgert werden, zu welchem Zeitpunkt die Lücke passiert wurde, d. h. die Lücke kann als Referenzmarke verwendet werden und ab diesem Zeitpunkt könnte ein absoluter Winkel gemessen werden. Alternativ könnten auch optische Inkrementalgeber mit Referenzmarken sowie Absolutwertgeber verwendet werden.

Wie ebenfalls eingangs erwähnt, sind grundsätzlich Drehzahlsensoren bekannt, welche die Drehrichtung erkennen und bspw. ein entsprechendes Ausgangssignal codieren, wobei solche Drehzahlsensoren allerdings bspw. auch die positive Signalflanke im Ausgangssignal zur Drehrichtungscodierung verwenden. Solche bekannten Drehzahlsensoren sind allerdings bei Motoren, wie Otto- oder Dieselmotoren, bei denen die positive Signalflanke zur Codierung einer Winkelposition eingesetzt wird, nicht einsetzbar.

Eine erfindungsgemäße Vorrichtung bzw. ein erfindungsgemäßes Verfahren zum Mitteilen einer Lageänderung eines Signalgeberrads, das zueinander beabstandete Signalmarken und wenigstens eine Referenzmarke aufweist, umfasst eine Sensoreinrichtung, die in Abhängigkeit von der Position der Signalmarken und der wenigstens einen Referenzmarke ein Sensorsignal ausgibt, wobei das Sensorsignal bei einer Vorwärtsdrehrichtung des Signalgeberrads für jede Signalmarke eine erste Signalflanke aufweist und für die Referenzmarke eine zweite Signalflanke, wobei die erste und die zweite Signalflanke jeweils indikativ für eine gleich beabstandete Winkelposition des Signalgeberrads sind, und wobei bei einer Rückwärtsdrehrichtung das Sensorsignal (9b) pulsweitenmoduliert ist und dadurch indikativ für die Rückwärtsdrehrichtung ist.

Wie oben bereits ausgeführt, kann die Vorrichtung insbesondere im Kraftfahrzeugbereich, bspw. im Bereich des Triebstranges zum Einsatz kommen, wie zum Beispiel als Kurbelwellensensor, Nockenwellensensor oder dergleichen oder zum Bestimmen eines Verdrehwinkels einer elastischen Komponente, wie ein Zwei-Massen-Schwungrad oder dergleichen, wie auch schon oben ausgeführt wurde, wobei im Folgenden, ohne die Erfindung ausschließlich darauf zu beschränken, beispielhaft die Erfindung zum Erfassung einer Lage einer Kurbelwelle beschrieben wird.

Die Signalmarken des Signalgeberrads können als Zähne an einem Zahnrad oder Löcher in einem Lochblech oder dergleichen ausgestaltet sein. Die Zähne/Löcher können identisch ausgebildet sein und gleich beabstandet am Außenumfang des Signalgeberrads angeordnet sein, wie es grundsätzlich bekannt ist. Außerdem, wie eingangs erwähnt, kann das Signalgeberrad auch als Multipolrad ausgestaltet sein, bei dem die Zähne und Lücken als magnetischer Nord- bzw. Südpol ausgeführt sind.

Die (wenigstens eine) Referenzmarke kann, wie auch schon oben ausgeführt, durch Verbreitern eines Zahnes, Weglassen eines Zahnes, Vergrößern einer Lücke zwischen Zähnen, Vergrößern eines Loches, eines Lochabstandes, magnetischen Pols, etc. gebildet sein. Auch wenn im Folgenden beispielhaft davon ausgegangen wird, dass nur eine Referenzmarke am Signalgeberrad vorgesehen ist, ist die vorliegende Erfindung nicht in dieser Hinsicht beschränkt, sondern es können grundsätzlich beliebig viele Referenzmarken vorgesehen sein, wie es dem Fachmann auch bekannt ist.

Das Signalgeberrad kann an einer sich drehenden Komponente des Triebstrangs, z. B. der Kurbelwelle, Nockenwelle, Zwei-Massen-Schwungrad oder dergleichen befestigt sein und sich mitdrehen.

Die Sensoreinrichtung kann einen Sensor und bspw. eine Sensorelektronik aufweisen, wobei die Sensorelektronik eine integrierte Schaltung, analog-zu-digital Wandler, einen Speicher, Prozessor, etc. aufweisen kann.

Der Sensor (mit seinem Sensorelement oder seinen Sensorelementen) ist typischerweise ortsfest angebracht, während sich das Signalgeberrad an ihm vorbeidreht, wobei die vorliegende Erfindung nicht in dieser Hinsicht beschränkt ist und sich bei anderen Ausführungsbeispielen bspw. der Sensor dreht, während das Signalgeberrad ortsfest ist. Die benachbarte Anordnung des Sensors meint hier in einer Entfernung zum Signalgeberrad, die es dem Sensor erlaubt, in Abhängigkeit der Position der Signalmarken und der wenigstens einen Referenzmarke ein Sensorsignal auszugeben. Der Sensor kann ein optischer Sensor, ein induktiver Sensor oder dergleichen sein und detektieren, ob sich eine Signalmarke, Lücke oder dergleichen vor ihm befindet oder nicht, wie es allgemein bekannt ist. Grundsätzlich ist die vorliegende Erfindung nicht auf bestimmte Sensoren beschränkt. Außerdem kann der induktive Sensor ein magnetisch-induktiver Sensor, z. B. ein Spulensensor oder dergleichen sein. Daneben gibt es auch magnetostatische Sensoren, wie die erwähnten Hallsensoren oder MR-Sensoren, die bei manchen Ausführungsbeispielen zum Einsatz kommen können.

Die Sensoreinrichtung kann außerdem einen Mikroprozessor, einen Speicher, eine Schnittstelle und dergleichen aufweisen. Insbesondere kann die Signalauswertung derart ausgestaltet sein, dass sie in der Lage ist, das hierin beschriebene Verfahren auszuführen.

Die Sensoreinrichtung bzw. das Verfahren gibt in Abhängigkeit der Position der Signalmarken und der wenigstens einen Referenzmarke ein Sensorsignal aus, wobei das Sensorsignal bei einer Vorwärtsdrehrichtung des Signalgeberrads für jede Signalmarke eine erste Signalflanke aufweist und für die Referenzmarke eine zweite Signalflanke, wobei die erste und die zweite Signalflanke jeweils indikativ für eine gleich beabstandete Winkelposition des Signalgeberrads sind.

Dadurch, dass die Sensoreinrichtung bzw. das Verfahren auch bei der Referenzmarke eine Signalflanke ausgibt, die indikativ für eine Winkelposition ist, kann folglich auch bei der Referenzmarke die Winkelposition des Signalgeberrads ermittelt werden (z. B. in einer Motorsteuerung oder in der Sensoreinrichtung selbst). Bei manchen Ausführungsbeispielen wird die Drehrichtungsinformation, dass das Signalgeberrad rückwärts dreht, über einen definierten Zeitabstand zur negativen Signalflanke übertragen, wie auch weiter unten ausgeführt wird, womit bei der Vorwärtsdrehung des Signalgeberrads immer auch die positive Signalflanke für die Codierung der Winkelinformation zur Verfügung stehen kann. Eine Drehzahlabhängigkeit für die Drehrichtungserkennung kann bei manchen Ausführungsbeispielen vermieden werden. Weiterhin werden zusätzliche negative Signalflanken vermieden. Damit erlaubt die vorliegende Erfindung bei manchen Ausführungsbeispielen eine vereinfachte Signalverarbeitung im Motorsteuergerät.

Bei manchen Ausführungsbeispielen ist die Referenzmarke so ausgestaltet, dass das analoge Signal vom Sensor einen Nulldurchgang bei der entsprechenden anzuzeigenden Winkelposition hat, sodass das Sensorsignal an der entsprechenden Nulldurchgangsstelle eine Signalflanke hat.

Die Sensoreinrichtung bzw. das Verfahren kann die analogen Sensorsignale, die sie bspw. von dem Sensor erhält, in ein entsprechendes (Ausgabe-)Sensorsignal umwandeln, wie es allgemein bekannt ist, sodass das Sensorsignal bspw. ein Rechtecksignal ist, wie es ebenfalls grundsätzlich bekannt ist. Beim Rechtecksignal enthält jeder Rechteckpuls eine steigende und eine fallende Flanke.

Wie erwähnt, ist bei einer Rückwärtsdrehrichtung des Signalgeberrads das Sensorsignal pulsweitenmoduliert und dadurch indikativ für die Rückwärtsdrehrichtung, sodass folglich anhand des Sensorsignals ermittelt werden kann, in welche Richtung sich das Signalgeberrad dreht. Die Pulsweitenmodulation ist bspw. derart gewählt, dass sie nicht durch eine Modulierung, die sich durch unterschiedliche Drehzahlen des Signalgeberrads ergibt, verdeckt oder überlagert wird. Die Pulsweitenmodulation gibt bspw. eine bestimmte Pulspulse und/oder Pulslänge vor, anhand der dann bspw. die Motorsteuerung die Rückwärtsdrehung erkennen kann.

Wie auch weiter oben erwähnt, kann bei manchen Ausführungsbeispielen der Sensor bzw. die Sensoreinrichtung die Drehrichtung erkennen und dann in Reaktion auf die Erkennung der Rückwärtsdrehrichtung das Sensorsignal entsprechend pulsweitenmodulieren.

Bei manchen Ausführungsbeispielen ist das Sensorsignal bei der Vorwärtsdrehrichtung nicht (aktiv) pulsweitenmoduliert. Wie erwähnt, kann eine "Pulsweitenmodulierung" durch unterschiedliche Drehzahlen des Signalgeberrads ergeben, da der zeitliche Abstand der Signalflanken, die indikativ für eine Winkelposition sind, bei manchen Ausführungsbeispielen abhängig von der Drehzahl sind.

Bei manchen Ausführungsbeispielen unterscheidet sich eine Pulsweitenmodulierung des Sensorsignals zwischen der Vorwärtsdrehrichtung und der Rückwärtsdrehrichtung des Signalgeberrads, wodurch die Drehrichtung ermittelt werden kann. Die Pulsweitenmodulierung beeinflusst bspw. die entsprechende Pulspause zwischen zwei Pulsen. Dadurch kann die Drehrichtung erkannt werden, ohne ein zusätzliches Signal zu verwenden. Außerdem ist bei manchen Ausführungsbeispielen die Pulsweitenmodulation für die Rückwärtsdrehrichtung so gewählt, dass sie nicht mit einer durch unterschiedlichen Drehzahlen verursachten Pulsweitenmodulation verwechselt werden kann. Ferner ist erfindungsgemäß die Pulsweitenmodulation bei der Rückwärtsdrehrichtung so gewählt, dass sie nicht drehzahlabhängig ist. Erfindungsgemäß sind die Pulspausen fix, wodurch das Erkennen der Rückwärtsdrehrichtung vereinfacht wird.

Bei manchen Ausführungsbeispielen unterscheidet sich die erste und die zweite Signalflanke, sodass bspw. es nicht notwendig ist, eine weitere Signalflanke einzuführen, um den Signalpegel auf den entsprechenden Wert zu bringen, wenn die Referenzmarke erkannt wird.

Erfindungsgemäß ist die erste Signalflanke eine fallende Signalflanke (auch negative Signalflanke genannt) und die zweite Signalflanke ist eine steigende Signalflanke (auch positive Signalflanke genannt). Dabei kann bspw. für jede Signalmarke die zugehörige fallende Signalflanke zur Erkennung der zugehörigen Winkelposition verwendet werden und für die Erkennung der Winkelposition bei Erkennen der Referenzmarke kann die steigende Signalflanke verwendet werden.

Bei manchen Ausführungsbeispielen wird bei einer Drehrichtungsumkehr des Signalgeberrads die zweite Signalflanke in einem vorgegebenen Abstand zur ersten Signalflanke ausgegeben. Der Abstand kann bspw. 20, 30 oder 40 Mikrosekunden betragen, ohne die vorliegende Erfindung auf diese beispielhaften Zahlenwerte zu beschränken.

Erfindungsgemäß umfasst der Sensor wenigstens zwei beabstandete Sensorelemente. Das Sensorsignal kann auf einem Differenzsignal der Sensorsignale der Sensorelemente basieren. Die Sensorelemente können dabei so beabstandet sein, dass sie in der Umfangsrichtung des Signalgeberrads gesehen einen Abstand zueinander haben. Der Abstand der Sensorelemente kann dabei an eine Breite der Signalmarke und/oder Referenzmarke angepasst sein. Dadurch kann vorteilhafterweise ein Sensorsignalverlauf abgeleitet werden, der im Wesentlichen der Breite der Signalmarke und/oder der Referenzmarke entspricht.

Bei manchen Ausführungsbeispielen umfasst der Sensor wenigstens drei Hall-Sensorelemente und das Sensorsignal basiert auf Differenzsignalen der Sensorsignale der drei Hall-Sensorelemente. Die drei Hall-Sensorelemente können jeweils hintereinander und gleich beabstandet zueinander angeordnet sein, wobei der Abstand so gewählt sein kann, dass der Abstand von zwei außen angeordneten Hall-Sensorelementen ungefähr der Breite einer Signalmarke oder einer Referenzmarke entspricht und wobei das dritte Hall-Sensorelement ungefähr mittig zwischen den beiden Hall-Sensorelementen angeordnet ist. Dadurch kann ein Sensorsignalkurvenverlauf erzielt werden, der eine besonders genaue Ermittlung der Signal- und Referenzmarken erlaubt.

Ausführungsbeispiele der Erfindung werden nun beispielhaft und unter Bezugnahme auf die beigefügte Zeichnung beschrieben, in der:
Fig. 1 schematisch ein Ausführungsbeispiel einer Vorrichtung zum Erfassen und Mitteilen einer Lageänderung eines Signalgeberrads mit Zähnen als Signalmarken zeigt;
Fig. 2 die Vorrichtung mit Sensoreinrichtung zeigt;
Fig. 3 ein Sensorsignal der Vorrichtung von Fig. 2 bei einer Vorwärtsdrehung und einer Rückwärtsdrehung veranschaulicht;
Fig. 4 ein Sensorsignal der Vorrichtung von Fig. 2 bei einem Richtungswechsel auf einem Zahn von vorwärts nach rückwärts und umgekehrt veranschaulicht;
Fig. 5 ein Sensorsignal der Vorrichtung von Fig. 2 bei einem Richtungswechsel auf einer Lücke von vorwärts nach rückwärts und umgekehrt veranschaulicht;
Fig. 6 ein Ablaufschema eines Ausführungsbeispiel eines Verfahrens zum Erfassen und Mitteilen einer Lagenänderung eines Signalgeberrads darstellt.

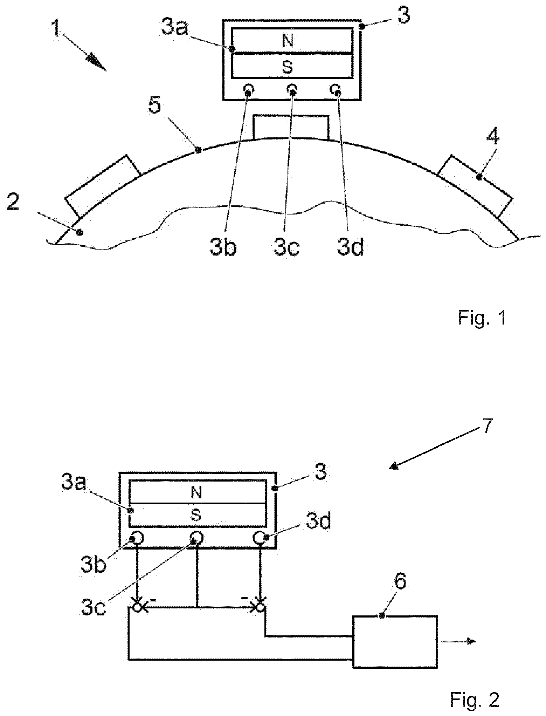

Ein Ausführungsbeispiel einer Vorrichtung 1 zum Erfassen und Mitteilen einer Lageänderung eines Signalgeberrads 2 ist in Fig. 1 gezeigt. Zur Vereinfachung wird im Folgenden allgemein das Signalgeberrad als Geberrad 2 bezeichnet.

Die Vorrichtung 1 hat jeweils einen Hall-Sensor 3, der jeweils einen Permanentmagneten 3a und drei Hall-Sensorelement 3b-d hat.

Das Geberrad 2 hat an seinem äußeren Umfang eine Reihe von Zähnen 4 (Signalmarken) zwischen denen jeweils eine Lücke 5 angeordnet ist. Bei anderen Ausführungsbeispielen kann das Geberrad auch als eine Art Lochblech ausgebildet sein, das eine Reihe von Lücken hat, die als Durchbrechungen oder Löcher in dem Geberrad ausgebildet sind, wobei zwischen den Lücken Material angeordnet ist, das im Wesentlichen als Zähne fungiert, wie die Zähne 4 des Geberrads 2 und daher als Signalmarken dienen.

Das von dem Permanentmagneten 3a erzeugte Magnetfeld wird entsprechend anders beeinflusst, wenn ein Zahn 4 oder eine Lücke 5 im Bereich des Hall-Sensors angeordnet ist. Die Beeinflussung des Magnetfelds durch die Zähne 4 bzw. Lücken 5 kann von den einzelnen Hall-Sensorelementen 3b-d gemessen werden. So ist bspw. anzunehmen, dass bei Vorhandensein der Zähne 4 das Magnetfeld stärker ist als bei Anwesenheit der Lücken 5, sodass die Hall-Sensoren 3 diesen Unterschied in der Magnetfeldstärke messen können.

Die Hall-Sensorelemente 3b-d sind in Drehrichtung des Geberrads 2 angeordnet, sodass sich die Zähne 4 und Lücken 5 an den Hall-Sensorelementen 3b-d bei Drehung des Geberrads 2 vorbei bewegen. Außerdem sind die Hall-Sensorelemente 3b-d so angeordnet, dass sie ungefähr die Breite der Zähne 4 abdecken. Der Abstand zwischen zwei äußeren Hall-Sensorelementen 3b und 3d entspricht folglich ungefähr der Breite eines Zahnes 4. Das dritte Hall-Sensorelement 3c ist ungefähr mittig zwischen den beiden anderen 3b, 3d angeordnet. Bei anderen Ausführungsbeispielen ist das dritte Hall-Sensorelement nicht in der Mitte zwischen den beiden anderen angebracht, um z. B. die Detektion der Drehrichtung zu vereinfachen bzw. zu verbessern.

In Fig. 2 ist beispielhaft eine Sensoreinrichtung 7 der Vorrichtung 1 dargestellt, die zusätzlich zu dem Sensor 3 eine als integrierte Schaltung ausgebildete Sensorelektronik 6 aufweist, welche die analogen Signale der Hall-Sensorelemente 3b-d in digitale Signale umwandelt und ein Sensorsignal ausgibt.

Dazu wird das Signal des mittleren Hall-Sensorelements 3c von den beiden äußeren 3b, 3d abgezogen und der Sensorelektronik 6 zugeführt, die über einen oder mehrere Ausgänge zum Empfang der Sensorsignale von den Hall-Sensorelementen 3b-d verfügt. Die Sensorelektronik 6 hat einen Mikroprozessor, einen Speicher, eine Signalverarbeitung (Verstärker, Analog-Digital-Wandler und dergleichen) usw.

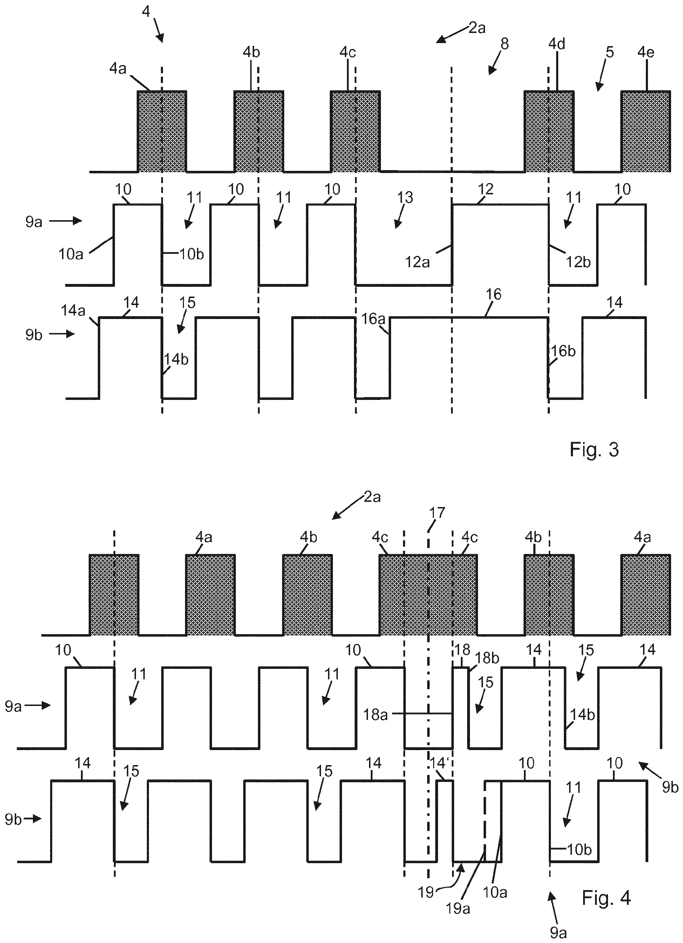

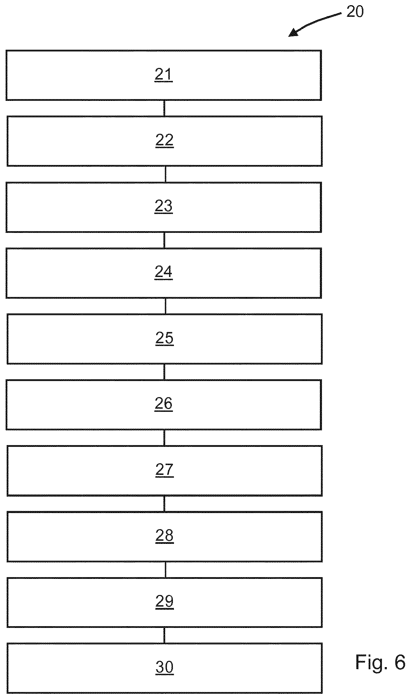

Im Folgenden wird die Funktionsweise der Vorrichtung 1 von Fig. 1 und 2 anhand eines Ablaufschemas eines Verfahrens 20 zur Erfassung einer Lageänderung des Geberrads nach Fig. 6 und anhand der Fig. 3 beschrieben.

Fig. 3 zeigt oben schematisch ein Profil 2a des Geberrads 2, das eine Reihe mit Zähnen 4 (nummeriert als 4a-e) und Lücken 5 zwischen ihnen aufweist und eine Referenzmarke 8 hat, die als vergrößerte Lücke zwischen zwei Zähnen 4 ausgebildet ist. Im vorliegenden Ausführungsbeispiel ist das Geberrad 2 so ausgestaltet, dass der Abstand von einer Zahnmitte zur nächsten einem Winkel von 6° entspricht (siehe bspw. der Abstand von der ersten gestrichelten Linie in der Mitte des ersten Zahnes 4a zur zweiten gestrichelten Linie in der Mitte des zweiten Zahnes 4b), ohne dass die vorliegende Erfindung auf diese spezifische Gestaltung des Geberrads 2 und den spezifischen Winkel von 6° beschränkt sein soll.

Zunächst erfasst das Verfahren 20 bei 21 die Signale des Hall-Sensors 3 bzw. der drei Hall-Sensorelemente 3b-d durch die Sensorelektronik 6. Wie oben ausgeführt, werden die Sensorsignale in Abhängigkeit der Position der Signalmarken und der Referenzmarke des Geberrads 2 erfasst, da die Zähne 4 und die Lücken 5 bzw. die Referenzmarke das Magnetfeld beim Vorbeilaufen stärken bzw. schwächen und diese Änderung des Magnetfeldes von den drei Hall-Sensorelementen entsprechend detektiert wird.

Bei einer Vorwärtsdrehung des Geberrads 2 erzeugt die Vorrichtung 1 bzw. die Sensoreinrichtung 7 ein Sensorsignal 9a und gibt dies beim Verfahrensschritt 22 aus, wie es in der Mitte von Fig. 3 veranschaulicht ist. Das Sensorsignal ist als Rechtecksignal ausgestaltet und hat für jeden Zahn 4 einen Rechteckpuls 10 mit einer steigenden Flanke 10a und einer fallenden Flanke 10b, wobei die fallende Flanke 10b bei der Mitte des zugehörigen Zahnes 4 ausgegeben wird und die steigende Flanke 10a in der Mitte der Lücke 5 zwischen zwei Zähnen 4. Zwischen den einzelnen Rechteckpulsen 10 gibt es eine Pulspause 11, die sich aus der physikalischen Lage der Mitte der Zähne 4 und der Lücken 5 und der damit verbundenen Nulldurchgänge des Signals des differentiellen Hall-Sensors 3 ergibt.

Die Referenzmarke 8 ist als große Lücke zwischen den Zähnen 4c und 4d ausgebildet, wobei die Länge der Lücke einem Winkel von 12° entspricht, sodass der Abstand zwischen der Mitte des Zahnes 4c zur Mitte der Referenzmarke 8 (siehe gestrichelte Linie) einem Winkel von 6° entspricht und der Abstand von der Mitte der Referenzmarke 8 (gestrichelte Linie) zur Mitte des nächsten Zahnes 4d (gestrichelte Linie) ebenfalls einem Winkel von 6° entspricht.

Die Referenzmarke 8 ist so ausgebildet, dass der Sensor 3 einen Nulldurchgang des zugehörigen analogen Signals in der Mitte der Referenzmarke 8 hat. In Reaktion darauf erzeugt die Sensoreinrichtung 7 beim Verfahrensschritt 23 einen Rechteckpuls 12, der eine steigende Flanke 12a in der Mitte der Referenzmarke 8 hat, also an einer Winkelposition, die einem Abstand von 6° zur Mitte des vorherigen Zahnes 4c entspricht. Dadurch entsteht eine Pulspause oder Lücke 13 zwischen dem letzten Rechteckpuls 10, der zum Zahn 4c gehört und dem Rechteckpuls 12, die größer ist als die Lücke 5 zwischen den Zähnen 4. Der Rechteckpuls 12 hat eine Pulslänge, die so beschaffen ist, dass seine fallende Flanke 12b bei der Mitte des ersten Zahnes 4d nach der Referenzmarke 8 ist.

Dadurch hat das Sensorsignal 9a bei der Vorwärtsdrehung des Geberrads 2 für jede 6° Winkelposition, die durch die Mitte eines Zahnes 4 angezeigt wird, eine fallende Flanke 10b und im Falle der Referenzmarke 8 hat das Sensorsignal bei der 6° Winkelposition eine steigende Flanke 12a, sodass eine Motorsteuerung für jede 6° Winkelposition eine entsprechende Flanke im Sensorsignal 9a hat.

Der Sensor 3 bzw. die Sensoreinrichtung 7 ist dazu ausgestaltet, eine Drehrichtung des Geberrads 2 zu erkennen, indem sie auswertet, in welcher Reihenfolge die drei Hall-Sensorelemente 3b-d ein Signal ausgeben.

Dementsprechend kann die Sensoreinrichtung 7 in Verfahrensschritt 24 beim Erkennen einer Rückwärtsdrehrichtung des Geberrads 2 in Verfahrensschritt 25 ein Sensorsignal 9b ausgeben (unten, Fig. 3), welches sich von dem Sensorsignal 9a (Mitte, Fig. 3) unterscheidet, in dem es pulsweitenmoduliert ist, wie im Folgenden erklärt wird.

Das Sensorsignal 9b hat Rechteckpulse 14, die jeweils bei der Mitte eines Zahnes 4 eine fallende Flanke 14b haben. Außerdem hat der Rechteckpuls 14 eine steigende Flanke 14a und seine Pulsdauer ist hier länger als die Pulsdauer der entsprechenden Rechteckpulse 10 des Sensorsignals 9a für die Vorwärtsdrehrichtung. Zwischen den Rechteckpulsen 14 ist eine Pulspause 15, die hier kleiner ist als die Pulspause 11 des Sensorsignals 9a für die Vorwärtsdrehung, sodass bspw. eine Motorsteuerung anhand der kleineren Pulspause 15 und/oder an der längeren Pulsdauer des Rechteckpulses 14 erkennen kann, dass sich bspw. die Kurbelwelle rückwärts dreht.

Im Falle der Referenzmarke 8 erzeugt die Sensoreinrichtung 7 einen langen Rechteckpuls 16 mit einer steigenden Flanke 16a und einer fallenden Flanke 16b, wobei die fallende Flanke 16b bei der Mitte des ersten Zahnes 4 nach der Referenzmarke 8 auftritt.

Im Falle der Rückwärtsdrehung hat das Sensorsignal 9b folglich bei jeder Mitte eines Zahnes 4 eine fallende Flanke, die steigende Flanke in der Mitte der Referenzmarke 8 entfällt aber, um bspw. die vorgegebene Pulspause 15, die hier z. B. 60 Mikrosekunden beträgt, kontinuierlich auszugegeben und damit die Rückwärtsdrehung des Geberrads 2 zu codieren.

Fig. 4 veranschaulicht beispielhaft eine Drehrichtungsumkehr des Geberrads 2 von vorwärts nach rückwärts (Mitte) und von rückwärts nach vorwärts (unten) während ein Zahn 4 vor dem Sensor 3 ist.

Wie in Fig. 4 in der Mitte veranschaulicht, gibt die Sensoreinrichtung 7 zunächst das Sensorsignal 9a für die erkannte Vorwärtsdrehrichtung des Geberrads 2 aus. Dann erfolgt bei 17 eine Umkehrung der Drehrichtung beim Zahn 4c, die nach einer gewissen Zeitspanne, z. B. in weniger als hundert Mikrosekunden, durch die Sensoreinrichtung 7 beim Verfahrensschritt 26 erkannt wird. Mithilfe eines Glitchfilters oder dergleichen kann die Sensoreinrichtung 7 beim Verfahrensschritt 27 im Rahmen der Pulsweitenmodulierung einen Zusatzpuls 18 einfügen, der eine steigende Flanke 18a und eine fallende Flanke 18b mit einer Pulsdauer hat, die derart beschaffen ist, dass nach der fallenden Flanke 17b die vorgegebene Pulspause oder Lücke 15 erfolgt, welche die Rückwärtsdrehrichtung des Geberrads 2 angibt.

Anschließend gibt die Sensoreinrichtung 7 das Sensorsignal 9b für die Rückwärtsdrehrichtung aus.

Wie in Fig. 4 unten veranschaulicht, gibt die Sensoreinrichtung 7 zunächst das pulsweitenmodulierte Sensorsignal 9b für die erkannte Rückwärtsdrehrichtung des Geberrads 2 aus. Dann wird, wie beschrieben, am Punkt 17 beim Zahn 4c eine Drehrichtungsumkehr des Geberrads zur Vorwärtsrichtung erkannt, sodass dann wieder bei der Mitte des Zahnes 4c eine fallende Flanke 14b des durch die Umkehrung verkürzten Rechteckpulses 14 auftritt.

Bei dem Ausführungsbeispiel der Fig. 4 wartet nun die Sensoreinrichtung 7 bis zum Auftreten der nächsten Mitte der Lücke 5 und gibt dann den Rechteckpuls 10 für die Vorwärtsdrehrichtung aus, wobei seine steigende Flanke 10a in der Mitte der Lücke 5 auftritt.

Bei einem alternativen Ausführungsbeispiel, wie durch die gestrichelte Linie in Fig. 4 dargestellt, gibt die Sensoreinrichtung 7 beim Verfahrensschritt 28 nach der Umkehrung von rückwärts nach vorwärts nach einer vorgegebenen Zeitdauer 19 eine steigende Flanke 19a aus, sodass der Rechteckpuls länger wird und dann seine fallende Flanke 10b, wie im anderen Fall auch, bei der Mitte des nächsten Zahnes 4b hat.

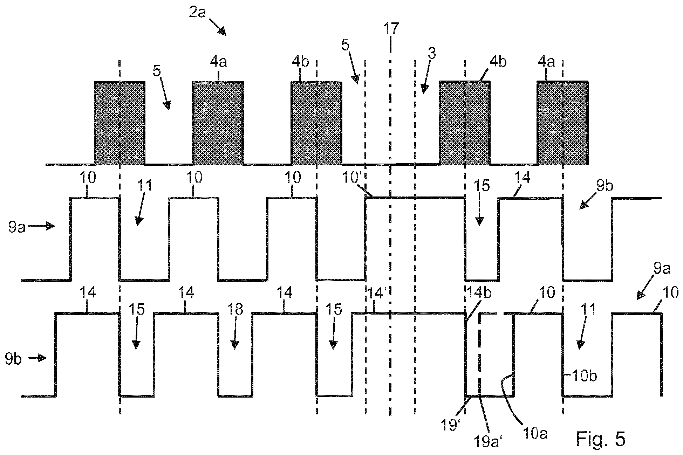

Fig. 5 veranschaulicht beispielhaft eine Drehrichtungsumkehr des Geberrads 2 von vorwärts nach rückwärts (Mitte) und von rückwärts nach vorwärts (unten) während eine Lücke 5 vor dem Sensor 3 ist.

Wie Fig. 5 in der Mitte veranschaulicht, gibt die Sensoreinrichtung 7 zunächst das Sensorsignal 9a für die Vorwärtsrichtung aus. Bei 17 findet die Drehrichtungsumkehr in der Lücke 5 statt, die zwischen den Zähnen 4b und 4c (siehe auch Fig. 3) vorhanden ist.

Dadurch wird der Rechteckpuls 10` länger als der normale Rechteckpuls 10 und das Signal bleibt auf hoch bis die nächste Zahnmitte erreicht ist und folglich die fallende Flanke 10b ausgegeben wird, welche die entsprechende 6° Winkelposition angibt. Danach erfolgt die durch die Pulsweitenmodulierung vorgegebene Pulspause 15, welche die Rückwärtsdrehrichtung codiert, und die Sensoreinrichtung 7 gibt das Sensorsignal 9b entsprechend mit den Rechteckpulsen 14 und den Pulspausen 15 aus.

Wie Fig. 5 unten veranschaulicht, gibt die Sensoreinrichtung 7 zunächst das pulsweitenmodulierte Sensorsignal 9b für die Rückwärtsrichtung des Geberrads aus. Wenn die Drehrichtung bei 17 bei einer Lücke 5 umkehrt und die Sensoreinrichtung 7 das beim Verfahrensschritt 29 erkennt, so lässt sie das Signal auf hoch, was zu einem verlängerten Rechteckpuls 14` führt, dessen fallende Flanke 14b ausgegeben wird, sobald wieder die Mitte eines Zahnes 4, in diesem Fall des Zahnes 4b erkannt wird.

Um nun auf das Sensorsignal 9a für die Vorwärtsdrehrichtung umzukehren, kann die Sensoreinrichtung 7 einfach warten, bis die Mitte der nächsten Lücke 5 erreicht ist, um dann die steigende Flanke 10a und den zugehörigen Rechteckpuls 10 auszugeben.

Bei einem alternativen Ausführungsbeispiel gibt die Sensoreinrichtung 7 aber beim Verfahrensschritt 30 nach der letzten Flanke 14b nach einer vorgegebenen Zeitdauer 19` eine steigende Flanke 19a' aus, die zu einem verlängerten Puls führt, dessen fallende Flanke 10b dann auftritt, wenn die Mitte des nächsten Zahnes 4b erkannt wird.

Bei manchen Ausführungsbeispielen wird entsprechend kein Zahn, d. h. keine fallende Flanke, zu wenig und auch kein Zahn zu viel detektiert; es werden also weder zu wenig noch zu viele Flanken pro Umdrehung des Geberrads detektiert.

### Bezugszeichenliste

- 1: Vorrichtung zum Erfassen bzw. Mitteilen einer Lageänderung eines Signalgeberrads
- 2: Signalgeberrad (Geberrad)
- 2a: Profil des Signalgeberrads
- 3: Hall-Sensor
- 3a: Permanentmagnet
- 3b-d: Hall-Sensorelemente
- 4,a-e: Zähne (Signalmarken)
- 5: Lücken
- 6: Sensorelektronik
- 7: Sensoreinrichtung
- 8: Referenzmarke
- 9a: Sensorsignal - Vorwärtsdrehung
- 9b: Sensorsignal - Rückwärtsdrehung
- 10: Rechteckpuls für Zähne
- 10a: steigende Flanke
- 10b: fallende Flanke
- 11: Pulspause zwischen 10
- 12: Rechteckpuls bei Referenzmarke
- 12a: steigende Flanke von 12
- 12b: fallende Flanke von 12
- 13: große Pulspause
- 14: Rechteckpuls bei Zahn (Rückwärtsdrehung)
- 14a: steigende Flanke von 14
- 14b: fallende Flanke von 14
- 15: Lücke zwischen 14
- 16: großer Rechteckpuls bei Referenzmarke (Rückwärtsdrehung)
- 16a: steigende Flanke von 16
- 16b: fallende Flanke von 16
- 17: Drehrichtungsumkehr
- 18: Zusatzpuls
- 18a: steigende Flanke von 18
- 18b: fallende Flanke von 18
- 19: vorgegebene Zeit
- 19a: Flanke nach vorgegebener Zeit
- 19`: vorgegebene Zeit
- 19a': Flanke nach vorgegebener Zeit
- 20: Verfahren zum Erfassen bzw. Mitteilen einer Lageänderung eines Signalgeberrads
- 21: Erfassen der Signale vom Sensor 3
- 22: Ausgeben Sensorsignal Vorwärtsdrehrichtung
- 23: Erzeugen Rechteckpuls mit steigender Flanke bei Referenzmarke
- 24: Erkennen Rückwärtsdrehung
- 25: Ausgeben Sensorsignal Rückwärtsdrehrichtung
- 26: Erkennen Drehrichtungsumkehr auf Zahn
- 27: Ausgeben Zusatzpuls
- 28: Ausgeben Flanke nach vorgegebener Zeit nach Umkehrung von rückwärts nach vorwärts
- 29: Erkennen Drehrichtungsumkehr auf Lücke
- 30: Ausgeben Flanke nach vorgegebener Zeit nach Umkehrung von rückwärts nach vorwärts

## Patentansprüche

1. Vorrichtung zum Mitteilen einer Lageänderung eines Signalgeberrads (2), das zueinander beabstandete Signalmarken (4, 4a-e) und wenigstens eine Referenzmarke (8) aufweist, umfassend:
eine Sensoreinrichtung (7) aufweisend wenigstens zwei beabstandete Sensorelemente (3b-d), wobei die Sensoreinrichtung (7) in Abhängigkeit der Position der Signalmarken (4, 4a-e) und der wenigstens einen Referenzmarke (8) ein Sensorsignal (9a, 9b) ausgibt, das auf einem Differenzsignal der Sensorsignale der Sensorelemente basiert, wobei das Sensorsignal (9a) bei einer Vorwärtsdrehrichtung des Signalgeberrads (2) für jede Signalmarke (4, 4a-e) eine erste Signalflanke (10b) aufweist und für die Referenzmarke (8) eine zweite Signalflanke (12a), wobei die erste Signalflanke (10b) eine fallende Signalflanke ist und die zweite Signalflanke (12a) eine steigende Signalflanke ist, wobei die erste und die zweite Signalflanke jeweils indikativ für eine gleich beabstandete Winkelposition des Signalgeberrads (2) sind, und wobei bei einer Rückwärtsdrehrichtung das Sensorsignal (9b) pulsweitenmoduliert ist und dadurch indikativ für die Rückwärtsdrehrichtung ist, dass die Pulsweitenmodulation bei der Rückwärtsdrehrichtung drehzahlunabhängige fixe Pulspausen aufweist.

2. Vorrichtung nach Anspruch 1, wobei bei einer Drehrichtungsumkehr des Signalgeberrads (2) eine steigende Signalflanke (19a, 19a') in einem vorgegebenen Abstand zur ersten Signalflanke (10b, 14b) ausgegeben wird.

3. Vorrichtung nach Anspruch 1 oder 2, wobei das Sensorsignal (9a, 9b) auf Differenzsignalen der Sensorsignale von drei Hall-Sensorelementen (3b-d) basiert.

4. Verfahren zum Mitteilen einer Lageänderung eines Signalgeberrads, das zueinander beabstandete Signalmarken (4, 4a-e) und wenigstens eine Referenzmarke (8) aufweist, umfassend:
Ausgeben (22) eines Sensorsignals, das auf einem Differenzsignal der Sensorsignale von wenigstens zwei beabstandeten Sensorelementen (3b-d) basiert, in Abhängigkeit der Position der Signalmarken (4, 4a-e) und der wenigstens einen Referenzmarke (8), wobei das Sensorsignal (9a) bei einer Vorwärtsdrehrichtung des Signalgeberrads (2) für jede Signalmarke (4, 4a-e) eine erste Signalflanke (10b) aufweist und für die Referenzmarke (8) eine zweite Signalflanke (12a), wobei die erste Signalflanke (10b) eine fallende Signalflanke ist und die zweite Signalflanke (12a) eine steigende Signalflanke ist, wobei die erste und die zweite Signalflanke jeweils indikativ für eine gleich beabstandete Winkelposition des Signalgeberrads (2) sind, und wobei bei einer Rückwärtsdrehrichtung das Sensorsignal (9b) pulsweitenmoduliert ist und dadurch indikativ für die Rückwärtsdrehrichtung ist, dass die Pulsweitenmodulation bei der Rückwärtsdrehrichtung drehzahlunabhängige fixe Pulspausen aufweist.

5. Verfahren nach Anspruch 4, wobei bei einer Drehrichtungsumkehr des Signalgeberrads (2) eine steigende Signalflanke (19a, 19a') in einem vorgegebenen Abstand zur ersten Signalflanke (10b, 14b) ausgegeben wird.

6. Verfahren nach Anspruch 4 oder 5, wobei das Sensorsignal (9a, 9b) auf Differenzsignalen der Sensorsignale von drei Hall-Sensorelementen (3b-d) basiert.

## Claims

1. Device for reporting a change in the position of a signaling wheel (2), which has signaling markers (4, 4a-e) spaced apart from one another and has at least one reference marker (8), comprising:
a sensor device (7) having at least two spaced-apart sensor elements (3b-d), wherein the sensor device (7) outputs a sensor signal (9a, 9b) depending on the position of the signaling markers (4, 4a-e) and the at least one reference marker (8), which sensor signal is based on a differential signal of the sensor signals of the sensor elements, wherein the sensor signal (9a) has a first signal edge (10b) for each signaling marker (4, 4a-e) and has a second signal edge (12a) for the reference marker (8) in a forward direction of rotation of the signaling wheel (2), wherein the first signal edge (10b) is a falling signal edge, and the second signal edge (12a) is a rising signal edge, wherein the first and second signal edges are each indicative of an equally spaced angular position of the signaling wheel (2), and wherein the sensor signal (9b) is pulse-width-modulated in a reverse direction of rotation and is thus indicative of the reverse direction of rotation in that the pulse width modulation has rotational-speed-independent fixed pulse pauses in the reverse direction of rotation.

2. Device according to claim 1, wherein a rising signal edge (19a, 19a') is output at a predetermined interval with respect to the first signal edge (10b, 14b) when the direction of rotation of the signaling wheel (2) is reversed.

3. Device according to claim 1 or 2, wherein the sensor signal (9a, 9b) is based on differential signals of the sensor signals from three Hall sensor elements (3b-d).

4. Method for reporting a change in position of a signaling wheel, which has signaling markers (4, 4a-e) spaced apart from one another and has at least one reference marker (8), the method comprising:
outputting (22) a sensor signal which is based on a differential signal of the sensor signals from at least two spaced-apart sensor elements (3b-d), depending on the position of the signaling markers (4, 4a-e) and the at least one reference marker (8), wherein the sensor signal (9a) has a first signal edge (10b) for each signaling marker (4, 4a-e) and has a second signal edge (12a) for the reference marker (8) in a forward direction of rotation of the signaling wheel (2), wherein the first signal edge (10b) is a falling signal edge, and the second signal edge (12a) is a rising signal edge, wherein the first and second signal edges are each indicative of an equally spaced angular position of the signaling wheel (2), and wherein the sensor signal (9b) is pulse-width-modulated in a reverse direction of rotation and is thus indicative of the reverse direction of rotation in that the pulse width modulation has rotational-speed-independent fixed pulse pauses in the reverse direction of rotation.

5. Method according to claim 4, wherein a rising signal edge (19a, 19a') is output at a predetermined interval with respect to the first signal edge (10b, 14b) when the direction of rotation of the signaling wheel (2) is reversed.

6. Method according to claim 4 or 5, wherein the sensor signal (9a, 9b) is based on differential signals of the sensor signals from three Hall sensor elements (3b-d).

## Revendications

1. Dispositif permettant la communication d'un changement de position d'une roue émettrice de signal (2) qui présente des marques de signal (4, 4a-e) espacées les unes des autres et au moins une marque de référence (8), comprenant :
un appareil formant capteur (7) présentant au moins deux éléments de capteur (3b-d) espacés, dans lequel l'appareil formant capteur (7) émet un signal de capteur (9a, 9b) en fonction de la position des marques de signal (4, 4a-e) et de l'au moins une marque de référence (8), lequel signal de capteur est basé sur un signal différentiel entre les signaux de capteur des éléments de capteur, dans lequel le signal de capteur (9a) présente, lors d'un sens de rotation vers l'avant de la roue émettrice de signal (2), un premier flanc de signal (10b) pour chaque marque de signal (4, 4a-e) et un second flanc de signal (12a) pour la marque de référence (8), dans lequel le premier flanc de signal (10b) est un flanc de signal descendant et le second flanc de signal (12a) est un flanc de signal montant, dans lequel le premier et le second flanc de signal indiquent respectivement une position angulaire, lesquelles sont espacées de manière égale, de la roue émettrice de signal (2), et dans lequel, lors d'un sens de rotation vers l'arrière, le signal de capteur (9b) est modulé en largeur d'impulsion et indique le sens de rotation vers l'arrière par le fait que la modulation de largeur d'impulsion présente, lors du sens de rotation vers l'arrière, des pauses entre les impulsions fixes indépendantes de la vitesse de rotation.

2. Dispositif selon la revendication 1, dans lequel, lors d'une inversion du sens de rotation de la roue émettrice de signal (2), un flanc de signal montant (19a, 19a') est émis à un intervalle prédéterminé par rapport au premier flanc de signal (10b, 14b).

3. Dispositif selon la revendication 1 ou 2, dans lequel le signal de capteur (9a, 9b) se base sur des signaux différentiels entre les signaux de capteur de trois éléments de capteur à effet Hall (3b-d).

4. Procédé permettant la communication d'un changement de position d'une roue émettrice de signal qui présente des marques de signal (4, 4a-e) espacées les unes des autres et au moins une marque de référence (8), comprenant :
l'émission (22) d'un signal de capteur, lequel est basé sur un signal différentiel entre les signaux de capteur d'au moins deux éléments de capteur (3bd) espacés, en fonction de la position des marques de signal (4, 4a-e) et de l'au moins une marque de référence (8), dans lequel le signal de capteur (9a) présente, lors d'un sens de rotation vers l'avant de la roue émettrice de signal (2), un premier flanc de signal (10b) pour chaque marque de signal (4, 4a-e) et un second flanc de signal (12a) pour la marque de référence (8), dans lequel le premier flanc de signal (10b) est un flanc de signal descendant et le second flanc de signal (12a) est un flanc de signal montant, dans lequel le premier et le second flanc de signal indiquent respectivement une position angulaire, lesquelles sont espacées de manière égale, de la roue émettrice de signal (2), et dans lequel, lors d'un sens de rotation vers l'arrière, le signal de capteur (9b) est modulé en largeur d'impulsion et indique le sens de rotation vers l'arrière par le fait que la modulation de largeur d'impulsion présente, lors du sens de rotation vers l'arrière, des pauses entre les impulsions fixes indépendantes de la vitesse de rotation.

5. Procédé selon la revendication 4, dans lequel, lors d'une inversion du sens de rotation de la roue émettrice de signal (2), un flanc de signal montant (19a, 19a') est émis à un intervalle prédéterminé par rapport au premier flanc de signal (10b, 14b).

6. Procédé selon la revendication 4 ou 5, dans lequel le signal de capteur (9a, 9b) est basé sur des signaux différentiels entre les signaux de capteur de trois éléments de capteur à effet Hall (3b-d).
